# EUROPÄISCHE PATENTANMELDUNG

(11) **EP 4 088 579 A1**
(43) Veröffentlichungstag der Anmeldung: **16.11.2022**
(21) Anmeldenummer: 22172710.0
(22) Anmeldetag: 11.05.2022
(51) Int. Cl.: A01P 17/00, A01N 35/04, A01N 37/10, A01N 37/44, A01N 65/08, A01N 65/10, A01N 65/12, A01N 65/30, A01N 65/36, A01N 65/48

(54) **ZUSAMMENSETZUNG UND DEREN VERWENDUNG ALS REPELLENT ZUR SAATGUTBEHANDLUNG GEGEN VOGELFRASS**

(30) Priorität: 12.05.2021 EP 21173568
(71) Anmelder: SeedForward GmbH, 49076 Osbabrück (DE)
(72) Erfinder: RITTER, Jan, 49078 Osnabrück (DE)
(74) Vertreter: Pelster Behrends Patentanwälte PartG mbB

(57) **Zusammenfassung**

Die Erfindung betrifft eine Zusammensetzung zur Saatgutbehandlung gegen Vogelfraß umfassend ein Pflanzenmaterial und/oder ein Pflanzenextrakt, deren Verwendung als Repellent zur Saatgutbehandlung gegen Vogelfraß und Saatgut beschichtet mit der Zusammensetzung.

## Beschreibung

Die Erfindung betrifft eine Zusammensetzung zur Saatgutbehandlung gegen Vogelfraß umfassend ein Pflanzenmaterial und/oder ein Pflanzenextrakt, deren Verwendung als Repellent zur Saatgutbehandlung gegen Vogelfraß und Saatgut beschichtet mit der Zusammensetzung.

Ein ständiges Problem in der Landwirtschaft besteht in dem Verlust von gepflanztem Saatgut aufgrund von samenfressenden Vögeln. Neben dem Verlust des Saatguts entsteht dadurch ein großer Verlust an Pflanzenerträgen. Die Verwendung von Giften zur Beschichtung von Samen stellt eine zusätzliche Gefahr für viele Wildtierarten und Haustiere dar. Daher besteht set langem ein Bedarf nach einer Möglichkeit, Saatgut sicher zu behandeln, damit Vögel nicht von ihm als Nahrung angelockt werden.

Gängige Vogelabwehrzusammensetzungen (Repellents) sprechen verschiedene sensorische Reize von Vögeln an, um eine Aufnahme des Saatgutes zu verhindern bzw. zu reduzieren. Bisher bekannte, repellent wirkendende Produkte auf dem Markt sprechen hauptsächlich den oralen Geschmacksinn von Vögeln an.

US 2010/0273874 A1 die Verwendung von Propineb, eine Organoschwefelzinkverbindung, als Vogelrepellent.

GB 2 213 724 A beschreibt ein Katzen-, Hunde-, Vogel- und/oder Insektenabwehrmittel umfassend eine Vielzahl von Bestandteilen, ausgewählt aus Denatoniumbenzoat, Quassia-Extrakt, Enzian, Madda, Gummi-Akazie, Griseofulvin, Cochenille-Extrakt und/oder synthetischer Cochenille, Kerosin oder Gasöl, Ethylmercaptan, dementholisiertes Kampferöl, Terpentin, Meeresöl und 2,4,6-Trichlorphenol.

US 3 051 617 A offenbart eine Vogelabwehrzusammensetzung, welche bevorzugt mit Sand gemischt auf den Boden aufgebracht wird, umfassend ganze Anissamen, zerkleinert und fein zerteilt, sowie ein Trägermittel, bevorzugt Leichtöl. Weiterhin beschreibt das Dokument US 3 051 617 A die Verwendung von Anisöl und einem Anisextrakt. Bevorzugt weist die Zusammensetzung 2 Teelöffel Anissamen, 0,5 Teelöffel Anisöl, 0,5 Teelöffel Anisextrakt und 1 Tasse Leichtöl auf.

US 4 455 304 beschreibt eine natürliche, organische, aus Pflanzen erhaltende Repellent-Zusammensetzung umfassend fein verteilten, getrockneten Cayenne-Pfeffer und fein verteilten, getrockneten Knoblauch im Verhältnis im Bereich von 1:5 bis 5:1, wobei die Repellent-Zusammensetzung in einer Menge im Bereich von 0,37 bis 3,7 kg pro ha Anbaufläche ausgebracht wird.

EP 1 529 440 A1 offenbart Capsaicin als Vogelabwehrzusammensetzung, ein in verschiedenen Paprikaarten vorkommendes Alkaloid. Schneider et al. vergleichen das Schärfeprofil verschiedener Schärfe auslösender Substanzen, insbesondere Capsaicin (Chili- und Paprikafrüchte), Piperin (Pfeffer) und Zimtaldehyd (Zimt) mit Hilfe der Profilprüfung (Schneider et al. 2012).

WO 2020/169761 A1 offenbart eine Zusammensetzung umfassend einen Pflanzenextrakt, ausgewählt aus einem Extrakt aus einer Pfefferpflanze der Gattung *Piper,* insbesondere *Piper nigrum,* und (ii) einem Extrakt aus einer Ingwerpflanze *Zingiber officinale,* und ein Verfahren zur Abschreckung von Vögeln von Kulturpflanzenvermehrungsmaterial, insbesondere Samen. Weiterhin beschreibt WO 2020/169761 A1 eine Beschichtung mit einer Zusammensetzung umfassend Piperin, einem Säureamid-Alkaloid, u.a. aus *Piper nigrum,* sowie eine Zusammensetzung umfassend mindestens 50 % (v/v) eines *Piper*-Extrakts und bis zu 50 % (v/v) eines weiteren Pflanzenextrakts, bevorzugt der Knoblauchpflanze *Allium sativum.*

WO 2020/035547 A1 beschreibt eine Zusammensetzung zur Vergrämung von Schadorganismen, insbesondere von Vögeln und/oder Säugetieren, umfassend wenigstens eine Verbindung ausgewählt aus der Gruppe bestehend aus Humulonen, Lupulonen, Isohumulonen, Oxidationsprodukten der Lupulone wie Huluponen und Luputrionen, Allo-Isohumulonen, Abeo-Isohumulonen, Anti-Isohumulonen, Spiro-Isohumulonen, Humelinsäuren, Dihydro-Isohumulonen, Tetrahydro-Isohumulonen und Hexahydro-Isohumulonen, insbesondere ein Gemisch gewonnen aus Hopfen.

Clark beschreibt die Untersuchung von 117 zyklischen Kohlenstoffverbindungen hinsichtlich der Vogelabwehrwirkung (Clark 1997). US 5 672 352 A beschreibt ein Verfahren zum Abhalten von Vögeln vom Verzehr oder Nutzung eines Materials, insbesondere Wasser, Futtermittel, Feldfrüchte, Abwässer, Saatgut, polymere Oberflächenbeschichtungen und Agrarchemikalien wie Pestizide und Herbizide, durch die Bereitstellung einer aromatischen Verbindung mit einer Elektronenschiebenden Gruppe und einer Elektronenziehenden Gruppe oder einer neutralen Gruppe, wobei diese Gruppe die Elektronendonation an die Kernringstruktur des Materials nicht wesentlich behindert, wobei die Verbindung keine Anthranilsäureester oder ein Ester der Phenylessigsäure ist.

DE 199 57 603 A1 offenbart die Verwendung von Imidazol-Derivaten als Vogelrepellent-Stoffe, insbesondere das 1-[2-(2,4-Dichlorphenyl)-2-(2-propenyloxy)-ethyl]-1H-imidazol (Imazalil) und 3-(Imidazol-1-yl)-7-chlor-benzo-1,2,4-triazin-1-oxid (Triazoxid).

Kniestedt et al. beschreibt Zusammensetzungen umfassend 90,1 % Benzylalkohol und 2,6 % Capsaicinoide (Kniestedt et al. 2005).

Valente et al. beschreibt einen Fenchelsaatextrakt enthaltend Estragol, Fenchon, Anisaldehyd, Anethol, Benzaldehyd, Kampfer und Apiol (Valente et al. 2016).Li et al. offenbaren chemische Verbindungen in Kurkuma *(Curcuma longa* L.), insbesondere phenolische Verbindungen und Terpenoide (Li et al. 2011).

US 2 967 128 A offenbart eine Vogelabwehrzusammensetzung umfassend eine Verbindung, welche aus der Gruppe umfassend Methyl-o-N-methylaminobenzoat, Methylanthranilat, Ethylanthranilat, Phenylethylanthranilat, und Dimethylbenzylcarbinylacetat ausgewählt ist.

WO 2015/048451 A1 offenbart eine Vogelabschreckungszusammensetzung umfassend bevorzugt Methylanthranilat in einer Konzentration im Bereich von 10 bis 20 Gew.-%, und als weitere Inhaltsstoffe ein Metalloxid, eine Kohlenhydratquelle und eine Knoblauchsubstanz, wobei die Knoblauchsubstanz Knoblauch, grober Knoblauch, Knoblauchpulver, Knoblauchpulver, Knoblauchsaft oder zerdrückter Knoblauch ist.

FR 2959100 A1 beschreibt ein Vogelrepellent aus einem Granulat aus hydrophilem, biologisch abbaubarem Ölkuchen, das mit einer aktiven lipophilen flüssigen Zusammensetzung beladen und umhüllt ist, umfassend 53 bis 88 Gewichtsteile als Trockenmasse extrudiertes Mehl, 5 bis 15 Gewichtsteile Feuchtigkeit, 5 bis 30 Gewichtsteile einer aktiven lipophilen flüssigen Zusammensetzung, sowie 2 bis 15 Gewichtsteile Einbettungsparaffin, bevorzugt ausgewählt aus entölten Sonnenblumenmehlpellets, Raps-Kuchen-Pellets und Rübenschnitzel-Pellets. FR 2959100 A1 offenbart weiterhin die Zugabe von Methyl- und/oder Dimethylanthranilat, Ester der Anthranilsäure, Anthranilsäurederivate wie Phenylessigsäureester oder an Methyl- und/oder Dimethylanthranilat reiche ätherische Öle, wie Geraniol oder Neemöl.

Askham beschreibt die Effektivität von Methylanthranilat zur Vogelabwehr bei Kirschen, Blaubeeren und Trauben (Askham 1992). Die Zerstörung von Kirschen wurde durch Behandlung mit einer 0,25 %-igen (v/v) wässrigen Methylanthranilat-Lösung um 43 % bis 98 %, die Zerstörung von Blaubeeren um 65 % bis 99 % und die Zerstörung von Trauben um 58 % bis 88 % reduziert.

Problematisch ist die Zersetzung von Methylanthranilat durch UV-Strahlung, daher wurde ein sogenanntes lipid-molekulares Bindemittel zugesetzt.

EP 1 897 565 A1 offenbart eine Vogelabwehrzusammensetzung eine aktive Verbindung, ein Lösungsmittel, ein Tensid, ein Harz, wobei die aktive Verbindung ein Anthranilsäurderivat, ein Acetophenonderivat, Veratroylderivat, Zimtsäurederivat oder Alkylphenylacetatderivat.

Alternative repellent wirkendende Produkte kombinieren die Abschreckung durch den oralen Geschmacksinn mit einer visuellen Abschreckung.

De Almeida et al. beschreiben die Untersuchung von Vogelfraß von getarnten Samen im Vergleich zu rotgefärbten oder blauen Samen, wobei die getarnten Samen, erstellt mit den Zutaten Flüssigfarbstoff und Pulverfarbstoff, beide braun und/oder terrakottafarben, weniger von Wildvögeln und die blauen Samen gar nicht von Wildvögeln gefressen wurden (De Almeida et al. 2010).

US 5 885 604 offenbart ein Verfahren zum Abschrecken von Vögeln unter Aufbringung eines ungiftigen Feststoffs auf die Samen vor dem Einpflanzen oder auf die Oberfläche des Bodens über den gepflanzten Samen umfassend ein ungiftiges festes Beschichtungsmaterial, das für den Geschmack von Vögeln abstoßend ist und Licht mit einer Wellenlänge im Bereich von 300 bis 400 nm absorbiert, bevorzugt ein polyzyklisches Chinon oder eine Vorläuferverbindung oder eine alkalische Lösung des polyzyklisches Chinons oder der Vorläuferverbindung, besonders bevorzugt 9,10-Anthrachinon, 1,2-Dihydroxyanthrachinon, 1,4-Dihydroxyanthrachinon, 1,8-Dihydroxyanthrachinon. Nachteilig wird Anthrachinon durch den Ausschuss für Risikobewertung (RAC) der Europäischen Chemikalienagentur (ECHA) seit dem 4. Dezember 2015 als krebserzeugend Carc 1B eingestuft.

WO 2004/000014 A1 beschreibt eine synergistische Vogelabwehrzusammensetzung umfassend eine Kombination von Anthrachinon und eine visuelle Markierung und/oder d-Pulegon zur Verwendung auf toxischen Schädlingsbekämpfungsködem, wo die Repellent-Zusammensetzung auf die Oberfläche des Köders aufgetragen wird, sowie im Gartenbau, wobei die Repellent-Zusammensetzung auf die Pflanzen, Früchte oder Boden um einen Obstgarten oder Weinberg herum aufgetragen wird. Die visuelle Markierung ist bevorzugt ein blauer oder grüner Farbstoff mit einer niedrigen relativen reflektierenden Wellenlänge im Bereich von 500 bis 700 nm.

WO 2016/014227 A1 beschreibt die Verwendung verschiedener Pigmente und Farbstoffe, die Licht im UV-Bereich absorbieren, insbesondere Titan(IV)-Oxid (TiO₂), Trisiloxane, Siloxane, UV-B-Absorptionsmittel; UV-A-Absorptionsmittel, CaCO₃, MgCO₃, Kohlenstoff und ZnO, zur synergistischen Verstärkung der Repellenzwirkung von polyzyklischen Chinonen, insbesondere von 9,10-Anthrachinonen, für Vögel und Huftiere.

US 10 501 658 B2 beschreibt ein vogelabwehrendes Beschichtungsmaterial, enthaltend mindestens eine mikroverkapselte wässrige Dispersion eines visuellen Vogelabwehrmittels und optional ein mikroverkapseltes flüchtiges olfaktorisches Vogelabwehrmittel, und einen wässrigen Harzträgerstoff. Das visuelle Vogelabwehrmittel ist bevorzugt ein fluoreszierender Aufheller, ein fluoreszierendes Protein oder ein wässriger Extrakt von Dornenkronenseestern *(Acanthaster planci*)*-*Pulver*.* Das flüchtige olfaktorische Vogelabwehrmittel ist bevorzugt ein schwefelhaltiges Terpenoid, eine schwefelhaltige heterozyklische Verbindung, eine sauerstoffhaltige heterozyklische Verbindung, Rhubafuran, Cinnamonitril oder Vertacetal. Bevorzugt ist das Verhältnis des visuellen Vogelabwehrmittels zum flüchtigen olfaktorischen Vogelabwehrmittel im Bereich von 0,1 Gew.-% bis 20 Gew.-%.

Daher besteht die Aufgabe der vorliegenden Erfindung darin, die Nachteile des Stands der Technik zu überwinden.

Die Aufgabe wird gelöst durch erfindungsgemäße Zusammensetzung zur Saatgutbehandlung gegen Vogelfraß sowie deren Verwendung und Saatgut beschichtet mit der Zusammensetzung. Vorteilhafte Ausgestaltungen sind in den abhängigen Ansprüchen angegeben.

Erfindungsgemäß wird eine erfindungsgemäße Zusammensetzung zur Saatgutbehandlung gegen Vogelfraß vorgeschlagen, umfassend
i. mindestens ein Pflanzenmaterial und/oder Pflanzenextrakt enthaltend mindestens einen Bitterstoff und/oder mindestens einen Scharfstoff, wobei ein Pflanzenmaterial und/oder Pflanzenextrakt enthaltend mindestens einen Bitterstoff ausgewählt ist aus Artemisia spp., Rheum spp., Gentiana spp., Alpinia spp., Angelica spp., Elettaria spp., Humulus spp., *Pimpinella spp., Citrus spp., Centaurium spp., Valeriana spp., Commiphora spp., Cichorium spp., Achillea spp., Cinchona spp., Quassia spp.* und/oder *Coriandrum spp.,* wobei ein Pflanzenmaterial und/oder Pflanzenextrakt enthaltend mindestens einen Scharfstoff ausgewählt ist aus *Eutrema spp., Armoracia spp., Aframomum spp., Cinnamomum camphora, Curcuma* spp. und/oder Zingiberaceaegewächse, und
ii. mindestens eine aromatische Verbindung, ausgewählt aus der Gruppe umfassend Anetol, o-Anisaldehyd, Anthranilsäuremethylester, Benzaldehyd, Benzylacetat, Zimtalkohol, Zimtaldehyd, Essigsäurecinnamylester, Hydrozimtaldehyd, Methylphenylacetat, Phenylethanol, wobei die mindestens eine aromatische Verbindung einen Gehalt im Bereich von 0,1 Gew.-% bis 1 Gew.-% bezogen auf das Gesamtgewicht der Zusammensetzung aufweist.

Unter dem Begriff "Repellent" wird ein Stoff verstanden, der von einem Organismus über den Geruchs- oder Geschmackssinn wahrgenommen wird und der diesen abschreckt, ohne ihn zu töten.

Vorteilhaft weist das erfindungsgemäße Repellent keine nachteiligen Auswirkungen auf die Umwelt oder auf die Verbraucher von Früchten oder Gemüse aus mit dem Repellent behandelten Pflanzen auf.

Durch die Zugabe von mindestens einer aromatischen Verbindung wird, bei der vorliegenden Erfindung, neben dem Geschmackssinn zusätzlich auch der Geruchssinn von Vögeln adressiert, um eine verbesserte, repellente Wirkung zu erzielen.

Unter dem Begriff "Bitterstoff" werden Verbindungen verstanden, welche aufgrund einer Aktivierung von T2R (G-Protein-gekoppelter Rezeptor) einen bitteren Geschmack aufweisen.

In Ausführungsformen der Erfindung sind Bitterstoffe aus Alkaloiden, Glycosiden und Isoprenoiden ausgewählt.

Unter dem Begriff Alkaloid werden aus pflanzlichen oder tierischen Organismen isolierte stickstoffhaltige organische Stoffe verstanden, wie Artemisinin, Sesquiterpene oder China-Alkaloide.

In einer Ausführungsform der Erfindung ist der mindestens eine Bitterstoff ausgewählt aus Artemisinin, Amarogentin, Secoiridoidglykosiden, Lupulin, China-Alkaloiden, Lactucin, Lactucopikrin, Galangol oder Quassin.

Unter dem Begriff "Scharfstoff" werden Verbindungen verstanden, welche beim Verzehr eine Reizung von Wärme- und Schmerz-Rezeptoren der Schleimhaut im Mund -, Nasen- oder Rachenraum hervorrufen.

In einer Ausführungsform der Erfindung ist der Scharfstoff ausgewählt aus Alkaloiden, wie beispielsweise Piperin, Capsaicinoiden, wie beispielsweise Capsaicin, Isothiocyanaten, wie beispielsweise Allylisothiocyanat und/oder Sinigrin, Schwefelverbindungen, wie beispielsweise Allicin und/oder Isoalliin, und/oder ätherischen Ölen, wie beispielsweise Gingerol und/oder Shoagol.

In Ausführungsformen umfasst die Zusammensetzung mindestens ein Pflanzenmaterial und/oder Pflanzenextrakt enthaltend mindestens einen Bitterstoff, ausgewählt aus Artemisia spp., Rheum spp., Gentiana spp., Alpinia spp., Angelica spp., Elettaria spp., Humulus spp., *Pimpinella spp., Citrus spp., Centaurium spp., Valeriana spp., Commiphora spp., Cichorium spp., Achillea spp., Cinchona spp., Quassia spp.* und/oder *Coriandrum spp.* und ein Pflanzenmaterial und/oder Pflanzenextrakt enthaltend mindestens einen Scharfstoff, ausgewählt aus *Eutrema spp., Armoracia spp., Aframomum spp., Cinnamomum camphora, Curcuma* spp. und/oder Zingiberaceaegewächse.

In Ausführungsformen umfasst die Zusammensetzung mindestens zwei Pflanzenmaterial und/oder Pflanzenextrakte enthaltend mindestens einen Bitterstoff, ausgewählt aus Artemisia spp., Rheum spp., Gentiana spp., Alpinia spp., Angelica spp., Elettaria spp., Humulus spp., *Pimpinella spp., Citrus spp., Centaurium spp., Valeriana spp., Commiphora spp., Cichorium spp., Achillea spp., Cinchona spp., Quassia spp.* und/oder *Coriandrum spp..*

In Ausführungsformen umfasst die Zusammensetzung mindestens ein Pflanzenmaterial und einen Pflanzenextrakt enthaltend mindestens einen Bitterstoff, ausgewählt aus Artemisia spp., Rheum spp., Gentiana spp., Alpinia spp., Angelica spp., Elettaria spp., Humulus spp., *Pimpinella spp., Citrus spp., Centaurium spp., Valeriana spp., Commiphora spp., Cichorium spp., Achillea spp., Cinchona spp., Quassia spp.* und/oder *Coriandrum spp..*

In bevorzugten Ausführungsformen der Erfindung ist das Pflanzenmaterial, enthaltend mindestens einen Bitterstoff ausgewählt aus der Gruppe umfassend *Artemisia* spp., *Rheum* spp., *Gentiana* spp., *Alpinia* spp., *Elettaria spp., Humulus spp., Commiphora* spp., *Cichorium* spp., *Achillea* spp., *Cinchona* spp., *Quassia* spp., *Coriandrum* spp. und *Pimpinella* spp..

In bevorzugten Ausführungsformen der Erfindung ist das Pflanzenmaterial, enthaltend mindestens einen Scharfstoff ausgewählt aus der Gruppe umfassend *Armoracia spp.,Cinnamomum camphora* und *Curcuma* spp..

In bevorzugten Ausführungsformen der Erfindung ist der Pflanzenextrakt, enthaltend mindestens einen Bitterstoff, gewonnen aus Pflanzen, ausgewählt aus der Gruppe umfassend *Artemisia* spp., *Rheum* spp., *Gentiana* spp., *Alpinia* spp., *Elettaria spp., Humulus spp., Commiphora* spp., *Cichorium* spp. *Achillea* spp., *Cinchona* spp., *Quassia* spp., *Coriandrum* spp. und *Pimpinella* spp.

In bevorzugten Ausführungsformen der Erfindung ist der Pflanzenextrakt, enthaltend mindestens einen Scharfstoff, gewonnen aus Pflanzen, ausgewählt aus der Gruppe umfassend *Armoracia spp.,Cinnamomum camphora* und *Curcuma* spp..

Unter dem Begriff "isolierter Bitterstoff" bzw. "isolierter Scharfstoff" wird ein Bitterstoff- bzw. Scharfstoffextrakt verstanden, welcher mindestens einen Gehalt an Bitterstoff bzw. Scharfstoff von 95 Gew.-%, bevorzugt mindestens 99 Gew.-%, aufweist.

In Ausführungsformen der Erfindung umfasst die erfindungsgemäße Zusammensetzung den mindestens einen Bitterstoff und/oder Scharfstoff mit einem Gehalt im Bereich von 0,1 Gew.-% bis 1 Gew.-%.

Erfindungsgemäß liegt der mindestens eine Bitterstoff und/oder Scharfstoff in Form eines Pflanzenmaterials und/oder eines Pflanzenextrakts vor.

Erfindungsgemäß besteht das Pflanzenmaterial aus Pflanzen, ausgewählt aus der Gruppe umfassend *Artemisia* spp., *Rheum* spp., *Gentiana* spp., *Alpinia* spp., *Angelica* spp., *Elettaria spp., Humulus spp., Pimpinella spp. Eutrema spp., Armoracia spp., Citrus spp., Centaurium spp., Aframomum spp., Valeriana* spp., *Cinnamomum camphora, Commiphora* spp., *Curcuma* spp., *Cichorium* spp. *Achillea* spp., *Cinchona* spp., *Zingiberaceaegewächse, Quassia* spp. und/oder *Coriandrum* spp.

Erfindungsgemäßist der Pflanzenextrakt hergestellt aus Pflanzen, wobei die Pflanzen ausgewählt sind aus der Gruppe umfassend *Artemisia* spp., *Rheum* spp., *Gentiana* spp., *Alpinia* spp., *Angelica* spp., *Elettaria spp., Humulus spp., Pimpinella spp. Eutrema spp., Armoracia spp., Citrus spp., Centaurium spp., Aframomum spp., Valeriana* spp., *Cinnamomum camphora, Commiphora* spp., *Curcuma* spp., *Cichorium* spp. *Achillea* spp., *Cinchona* spp., *Zingiberaceaegewächse, Quassia* spp. und/oder *Coriandrum* spp. vor.

Erfindungsgemäßist der mindestens eine Bitterstoff und/oder Scharfstoff in dem Pflanzenmaterial und/oder Pflanzenextrakt enthalten.

Bevorzugt umfasst die Zusammensetzung mindestens ein Pflanzenmaterial und/oder mindestens einen Pflanzenextrakt, hergestellt aus Pflanzen, wobei die Pflanzen ausgewählt sind aus *Artemisia* spp., Gentiana spp., *Rheum* spp., *Cinchona* spp, *Elettaria spp., Humulus spp.* oder*Commiphora* spp. und Armoracia spp..

In Ausführungsformen der Erfindung umfasst die Zusammensetzung jeweils mindestens zwei Pflanzenmaterialien oder mindestens zwei Pflanzenextrakte oder mindestens ein Pflanzenmaterial und mindestens ein Pflanzenextraktenthaltend mindestens einen Bitterstoff und mindestens einen Scharfstoff. Vorteilhaft ermöglicht die Kombination verschiedener Pflanzenmaterialien und/oder Pflanzenextrakte eine Erhöhung der repellenten Wirkung.

In einer Ausführungsform enthält die Zusammensetzung zusätzlich mindestens ein Pflanzenmaterial und/oder mindestens einen Pflanzenextrakt, die jeweils keinen Bitterstoff enthalten.

In Ausführungsformen der Erfindung ist das mindestens eine Pflanzenmaterial ausgewählt aus frischem Pflanzenmaterial oder getrocknetem Pflanzenmaterial mit oder ohne Restfeuchte. In einer Ausführungsform ist das Pflanzenmaterial zerkleinert, beispielsweise ein Pulver oder Granulat.

In Ausführungsformen der Erfindung ist der Pflanzenextrakt ausgewählt aus Fluidextrakt, Trockenextrakt und/oder Dickextrakt oder eine Mischung dieser. Zweckmäßig enthält der Pflanzenextrakt Inhaltsstoffe, insbesondere den Bitterstoff und/oder Scharfstoff, des Pflanzenmaterials, welche durch Extraktion mit einem wässrigen und/oder mindestens einem organischen Lösungsmittel aus dem Pflanzenmaterial herausgelöst wurden. Dem Fachmann sind verschiedene Extraktionsverfahren bekannt.

In einer Ausführungsform der Erfindung ist der Pflanzenextrakt ein wässriger Auszug aus Pflanzenmaterial. Dem Fachmann sind Methoden zur Gewinnung von wässrigen Auszügen aus Pflanzenmaterial bekannt.

In einer Ausführungsform der Erfindung ist der Pflanzenextrakt ein wässriger Pflanzenextrakt, erhalten durch Mischen von zerkleinertem Pflanzenmaterial und Wasser in einem Verhältnis im Bereich von 1:1 bis 1:50 (v/v), bevorzugt im Bereich von 1:1 bis 1:20 (v/v), und nach einer Zeitspanne von 1 min bis 72 h, bevorzugt 5 h bis 48 h Abtrennen des zerkleinerten Pflanzenmaterials, beispielsweise durch Filtration, von dem entstandenen wässrigen Pflanzenextrakt.

In weiteren Ausführungsformen der Erfindung ist der Pflanzenextrakt ein Lösungsmittelextrakt, d. h. die ganze Pflanze oder nur ein bestimmter Teil der Pflanze wird mit mindestens einem organischen Lösungsmittel in Kontakt gebracht, um bestimmte Bestandteile der Pflanze in dem Lösungsmittel zu extrahieren. Das für die Extraktion verwendete Lösungsmittel kann jedes nichtwässrige, organische Lösungsmittel sein, insbesondere Ethanol, Aceton, Ether, Dichlorethan, Ethylacetat oder Hexan. In Ausführungsformen ist umfasst das verwendete Lösungsmittel weiterhin Wasser. Vorzugsweise ist das verwendete Lösungsmittel eine Lösungsmittelkombination aus Ethylacetat, Aceton, Hexan und/oder Wasser.

Die Extraktion kann mehrere Male wiederholt werden, um den größten Teil der extrahierbaren Inhaltsstoffe, insbesondere Bitterstoffe, zu extrahieren. Nach der Lösungsmittelextraktion können die Lösungsmittel entfernt werden, z. B. durch Verdampfen, wodurch ein halbfester Extrakt bzw. Dickextrakt erhalten wird.

In weiteren Ausführungsformen der Erfindung ist der Pflanzenextrakt ein Oleoresin. Unter dem Begriff "Oleoresin" wird ein halbfester Pflanzenextrakt enthaltend Harze, Wachse, Fette und ätherische Öle verstanden.

In bevorzugten Ausführungsformen ist der Pflanzenextrakt ein wässriger Pflanzenextrakt.

In bevorzugten Ausführungsformen ist das mindestens eine Pflanzenmaterial frisches oder getrocknetes Pflanzenmaterial. In einer Ausführungsform ist dermindestens eine Pflanzenextrakt ein wässriger Pflanzenextrakt.

In Ausführungsformen umfasst die erfindungsgemäße Zusammensetzung das mindestens eine Pflanzenmaterial und/oder den mindestens einen Pflanzenextrakt mit einem Gehalt im Bereich von 1 Gew.-% bis 60 Gew.-%, bevorzugt im Bereich von 15 Gew.-% bis 30 Gew.-%.

In Ausführungsformen umfasst die erfindungsgemäße Zusammensetzung das mindestens eine Pflanzenmaterial mit einem Gehalt im Bereich von 10 Gew.-% bis 60 Gew.-%, bevorzugt im Bereich von 15 Gew.-% bis 30 Gew.-%.

In Ausführungsformen umfasst die erfindungsgemäße Zusammensetzung den mindestens einen Pflanzenextrakt mit einem Gehalt im Bereich von 1 Gew.-% bis 10 Gew.-%, bevorzugt im Bereich von 1 Gew.-% bis 5 Gew.-%.

Vorteilhaft enthält die erfindungsgemäße Zusammensetzung mindestens eine aromatische Verbindung, welche aufgrund ihres unangenehmen Geruchs eine repellente Wirklung haben.

Erfindungsgemäß ist die mindestens eine aromatische Verbindung aus aromatischen Heterozyklen, insbesondere Schwefel-haltigen und/oder Stickstoff-haltigen aromatischen Verbindungen; Acetophenonen, Anthranilaten, aromatischen Alkoholen, aromatischen Aldehyden, Acetaten oder Benzoaten ausgewählt, bevorzugt aus aromatischen Heterozyklen, Acetophenonen, Anthranilaten, aromatischen Alkoholen oder aromatischen Aldehyden ausgewählt, besonders bevorzugt aus aromatischen Heterozyklen oder Acetophenonen ausgewählt.

Unter dem Begriff "aromatische Verbindung" wird eine zyklische, organische Verbindung mit mindestens einem Ringsystem verstanden, das nach der Hückel-Regel in konjugierten Doppelbindungen, freien Elektronenpaaren oder unbesetzten p-Orbitalen eine Anzahl von 4n+2 (n = 0, 1, 2, ...) delokalisierten Elektronen (konjugiertes π-Elektronensystem) enthält.

Unter dem Begriff "Heterozyklen" wird eine aromatische Verbindung mit ringbildenden Atomen aus mindestens zwei verschiedenen chemischen Elementen, insbesondere Kohlenstoff und mindestens ein Element aus der Gruppe umfassend Sauerstoff (O), Stickstoff (N) oder Schwefel (S) ausgewählt.

Zweckmäßig sind die aromatischen Verbindungen in der erfindungsgemäßen Zusammensetzung weder toxisch noch krebserregend. Vorteilhaft weisen die aromatischen Verbindungen, ausgewählt aus aromatischen Heterozyklen, insbesondere Schwefel-haltigen und/oder Stickstoff-haltigen aromatischen Verbindungen; Acetophenonen, Anthranilaten, aromatischen Alkoholen, aromatischen Aldehyden, Acetaten oder Benzoaten, eine repellente Wirkung auf Vögel, insbesondere durch ihren Geschmack und/oder Geruch auf.

Erfindungsgemäß ist die mindestens eine aromatische Verbindung eine Verbindung nach Formel (I) 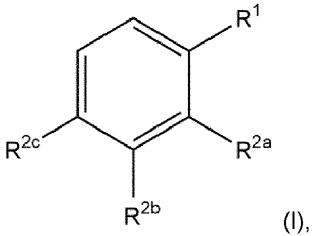
wobei R¹ aus einer Aldehydgruppe, Alkylaldehydgruppe, Alkenylaldehydgruppe, Alkenylgruppe, Estergruppe ausgewählt ist, insbesondere einer Ethansäureestergruppe; Alkylalkoholgruppe, Alkenylalkoholgruppe oder Aminogruppe,
wobei R^{2a}, R^{2b} oder R^{2c} aus einer Alkoholgruppe, Alkoxygruppe, insbesondere einer Methoxygruppe; Alkylgruppe, insbesondere einer Methyl- oder Ethylgruppe; oder Estergruppe, insbesondere einer Methylestergruppe, ausgewählt ist.

In Ausführungsformen der Erfindung ist R^{2a} aus einer Alkoholgruppe, Alkoxygruppe, insbesondere einer Methoxygruppe; Alkylgruppe, insbesondere einer Methyl- oder Ethylgruppe; oder Estergruppe, bevorzugt einer Methylestergruppe, ausgewählt, und R^{2b} und R^{2c} -H (Wasserstoff).

In alternativen Ausführungsformen ist R^{2b} aus einer Alkoholgruppe, Alkoxygruppe, insbesondere einer Methoxygruppe; Alkylgruppe, insbesondere einer Methyl- oder Ethylgruppe; oder Estergruppe, bevorzugt einer Methylestergruppe, ausgewählt, und R^{2a} und R^{2c}-H (Wasserstoff).

In weiteren alternativen Ausführungsformen ist R^{2c} aus einer Alkoholgruppe, Alkoxygruppe, insbesondere einer Methoxygruppe; Alkylgruppe, insbesondere einer Methyl- oder Ethylgruppe; oder Estergruppe, bevorzugt einer Methylestergruppe, ausgewählt, und R^{2a} und R^{2b} -H (Wasserstoff).

Erfindungsgemäß ist die mindestens eine aromatische Verbindung aus Anetol, o-Anisaldehyd, Anthranilsäuremethylester, Benzaldehyd, Benzylacetat, Zimtalkohol, Zimtaldehyd, Essigsäurecinnamylester, Hydrozimtaldehyd, Methylphenylacetat oder Phenylethanol ausgewählt. Vorteilhaft sind die aromatischen Verbindungen zugelassene Lebensmittelzusatzstoffe.

In bevorzugten Ausführungsformen ist die aromatische Verbindung Bittermandelöl bzw. Benzaldehyd und/oder Anthranilsäuremethylester.

In Ausführungsformen der Erfindung ist die aromatische Verbindung eine aus einem Pflanzenmaterial isolierte aromatische Verbindung.

Unter dem Begriff "isolierte aromatische Verbindung" wird ein Extrakt der aromatischen Verbindung verstanden, welcher mindestens einen Gehalt an dieser Verbindung von 95 Gew.-%, bevorzugt mindestens 99 Gew.-%, aufweist.

In Ausführungsformen der Erfindung ist die aromatische Verbindung eine aus einem Pflanzenmaterial, ausgewählt aus der Gruppe umfassend, Kakao, Kaffee, Trauben, Grapefruit, Jasmin, Zitronen, Limetten, Erdbeeren, Mandarinen, Gardenia, Flieder, Narcissen, Hyazinthen, Kampfer, den Samen von *Prunus*-Arten und/oder den Blüten von Ylang-Ylang-Baum oder *Citrus-*Arten, isolierte aromatische Verbindung.

In Ausführungsformen umfasst die erfindungsgemäße Zusammensetzung die mindestens eine aromatische Verbindung mit einem Gehalt im Bereich von 0,1 Gew.-% bis 2 Gew.-% bezogen auf das Gesamtgewicht der Zusammensetzung, bevorzugt im Bereich von 0,1 Gew.-% bis 1 Gew.- % bezogen auf das Gesamtgewicht der Zusammensetzung, besonders bevorzugt im Bereich von 0,3 Gew.-% bis 1 Gew.-% bezogen auf das Gesamtgewicht der Zusammensetzung.

In Ausführungsformen umfasst die erfindungsgemäße Zusammensetzung mindestens zwei aromatische Verbindungen, welche zusammen einen Gehalt im Bereich von 0,1 Gew.-% bis 2 Gew.-% bezogen auf das Gesamtgewicht der Zusammensetzung aufweisen, bevorzugt im Bereich von 0,1 Gew.-% bis 1 Gew.-% bezogen auf das Gesamtgewicht der Zusammensetzung, besonders bevorzugt im Bereich von 0,3 Gew.-% bis 1 Gew.-% bezogen auf das Gesamtgewicht der Zusammensetzung.

In weiteren Ausführungsformen der Erfindung enthält die Zusammensetzung zusätzlich eine organische oder anorganische Schwefelverbindung.

Zweckmäßig bildet die mindestens eine organische oder anorganische Schwefelverbindung kein Schwefelwasserstoff (H₂S).

Vorteilhaft weist die mindestens eine organische oder anorganische Schwefelverbindung eine repellente Wirkung auf Vögel auf, insbesondere einen Geruch und/oder Geschmack, welcher Vögel abstößt.

Durch die Zugabe der mindestens einen Schwefelverbindung wird bei der vorliegenden Erfindung der Geruchssinn von Vögeln noch stärker adressiert, um eine verbesserte, repellente Wirkung zu erzielen.

In Ausführungsformen der Erfindung umfasst die erfindungsgemäße Zusammensetzung die mindestens eine organische oder anorganische Schwefelverbindung mit einem Gehalt im Bereich von 0,5 Gew.-% bis 2 Gew.-% bezogen auf das Gesamtgewicht der Zusammensetzung, bevorzugt im Bereich von 0,7 Gew.-% bis 1,2 Gew.-% bezogen auf das Gesamtgewicht der Zusammensetzung.

In bevorzugten Ausführungsformen umfasst die erfindungsgemäße Zusammensetzung mindestens eine anorganische Schwefelverbindung. Besonders bevorzugt ist die mindestens eine Schwefelverbindung ein Metall, Alkali- und/oder Erdalkalisulfatsalz, und/oder Ammoniumsulfat. In einer Ausführungsform weist die erfindungsgemäße Zusammensetzung, insbesondere durch die enthaltenen Pflanzenmaterialien, einen grünen oder grün-braunen oder braunen Farbton auf. Vorteilhaft ist das mit der Zusammensetzung beschichtete Saatgut damit im oder auf dem Boden schlechter sichtbar und für Vögel somit schlechter auffindbar.

In Ausführungsformen der Erfindung umfasst die erfindungsgemäße Zusammensetzung weiterhin einen blauen Farbstoff, beispielsweise Indigo. Vorteilhaft hat dieser Farbton eine abschreckende Wirkung auf Vögel.

Vorteilhaft enthalten Pflanzenextrakt und/ oder Pflanzenmaterial Biostimulanzien bzw. wachstumsfördernde Substanzen.

In weiteren Ausführungsformen der Erfindung enthält die Zusammensetzung zusätzliche Biostimulanzien.

In Ausführungsformen der Erfindung sind die zusätzlichen Biostimulanzien ausgewählt aus Mikroorganismen, Algenpräparate, Vitamine, Aminosäuren, Phytohormone, Extrakte aus tierischen Produkten, Humin- und/oder Fulvosäuren.

Vorteilhaft entwickeln sich die Pflanzen so schneller aus dem Saatgut und können somit zügiger die kritischen Wachstumsstadien überwinden. Kritische Wachstumsstadien sind vor allem das ungekeimte Korn sowie die ersten Wachstumsstadien der verschiedenen Kulturpflanzen. Der Fachmann kennt das schnelle Herauswachsen aus kritischen Stadien als den sogenannten "Disease escape effect". Vorteilhaft wird dieser Effekt durch die erfindungsgemäße Zusammensetzung beschleunigt.

Vorteilhaft wird durch die erfindungsgemäße Zusammensetzung eine repellente Wirkung mit einer wachstumsfördernden Wirkung kombiniert, und dies vorteilhaft auf Basis natürlich vorkommender, umweltschonender Bestandteile.

In Ausführungsformen der Erfindung umfasst die erfindungsgemäße Zusammensetzung weiterhin mindestens ein Haftmittel bzw. einen Trägerstoff, ein Düngemittel, ein Entschäumungsmittel, ein Dispergiermittel und/oder ein Puffer.

In Ausführungsformen der Erfindung ist das Haftmittel bzw. der Trägerstoff eine zur Vernetzung geeignete Verbindung wie eine Polymerverbindung. In Ausführungsformen sind die Polymerverbindungen aus Polyalkoholen, Polyamiden; Polyurethanen, Polyacrylaten und deren Copolymeren, Polyvinylalkoholen und deren Copolymeren, Polyvinylacetaten und deren Copolymeren, Polyvinylpyrollidinonen, Polyacrylamiden und deren Copolymeren, Polyvinylidenchloriden und deren Copolymeren, Polyethyenglycol, Stärke, Methylcellulose und Methylcellulosederivaten, Xanthan und Xanthanderivaten, Alginat, Chitosan, *Gummi Arabicum,* Zellulose und Zellulosederivaten, Dextrin und Dextrinderivaten, Fetten, Ölen, Proteinen, Schellack *(Gummi Lacca),* und/oder Lignosulfonaten ausgewählt, bevorzugt aus Polyvinylacetat, Stärke, Methylcellulose und Methylcellulosederivaten, Xanthan und Xanthanderivaten, Alginat, Chitosan, *Gummi Arabicum,* Zellulose und Zellulosederivaten, Dextrin und Dextrinderivaten, Schellack *(Gummi Lacca),* und/oder Lignosulfonaten ausgewählt

In Ausführungsformen der Erfindung beträgt der Massenanteil an Haftmittel und/oder Trägerstoff 5 Gew.-% bis 60 Gew.-%, bevorzugt 5 Gew.-% bis 30 Gew.-% der Gesamtmasse erfindungsgemäßen Zusammensetzung.

In weiteren Ausführungsformen der Erfindung enthält die Zusammensetzung zusätzlich mindestens eine Substanz, die ein repellentes Mundgefühl bei Vögeln hervorruft. In einer Ausführungsform ist die Substanz ausgewählt aus Terpenoiden, hochmolekularen Huminsäuren und/oder Kieselgur.

Unter dem Begriff "Düngemittel" werden Substanzen verstanden, die Nährstoffe für ein verbessertes Pflanzenwachstum enthalten. In Ausführungsformen ist das Düngemittel aus organischen Düngern und/oder mineralischen Düngern ausgewählt, bevorzugt aus Eisenoxiden, Zinkoxiden, Manganoxiden, Boroxiden, Calcium-, Magnesium-, Phosphat-, Selen-, Kupfer-, Schwefel- und/oder Molybdän-Verbindungen. In Ausführungsformen ist das Düngemittel wasserlöslich.

In Ausführungsformen der Erfindung beträgt der Massenanteil an Düngemittel 5 Gew.-% bis 30 Gew.-%, bevorzugt 5 Gew.-% bis 15 Gew.-% der Gesamtmasse erfindungsgemäßen Zusammensetzung.

In weiteren Ausführungsformen sind die Düngemittel ausgewählt aus organischen Düngern und/oder mineralischen Düngern.

In Ausführungsformen der Erfindung ist das Düngemittel ein Feststoff in Form von Partikeln und/oder Pulver.

In Ausführungsformen der Erfindung sind die Düngemittel ausgewählt aus Eisenoxiden, Zinkoxiden, Manganoxiden, Boroxiden, Calcium-, Magnesium-, Phosphat-, Selen-, Kupfer-, Schwefel und/ oder Molybdän-Verbindungen.

In Ausführungsformen der Erfindung weisen die Düngemittel einen durchschnittlichen Partikeldurchmesser im Bereich von 10 µm bis500 µm, bevorzugt 20 µm bis 200 µm, besonders bevorzugt 20 µm bis 100 µm, insbesondere 20 µm bis 50 µm, auf.

In Ausführungsformen der Erfindung ist das Entschäumungsmittel aus Fettsäuren, Fettsäureestern, Fettsäureoxylaten, Polyamiden, Siliconölen, Siliziumdioxiden, Ölen, Polyalkylenglycolen und/oder Polyestern ausgewählt.

In Ausführungsformen der Erfindung beträgt der Massenanteil an Entschäumungsmittel 1 Gew.-% bis 10 Gew.-%, bevorzugt 0,1 Gew.-% bis 5 Gew.-%, besonders bevorzugt 0,1 bis 1 Gew.% der Gesamtmasse der erfindungsgemäßen Zusammensetzung.

In Ausführungsformen der Erfindung ist das Dispergiermittel ausgewählt aus Polycarboxylaten, Polyphosphaten, Siliconharzen, Siloxanen.

In Ausführungsformen der Erfindung ist der Puffer aus Phosphatpuffer, Carbonatpuffer, Silikatpuffer und Citratpuffern ausgewählt.

In Ausführungsformen der Erfindung enthält die Zusammensetzung mindestens eine grenzflächenaktive Substanz. Im Sinne der Erfindung umfasst der Begriff "grenzflächenaktive Substanz" Verbindungen, die sowohl hydrophile als auch hydrophobe Bereiche innerhalb ihrer chemischen Struktur aufweisen. Damit dienen sie als Vermittler zwischen sonst nicht oder nur schwer mischbaren Verbindungen.

In Ausführungsformen der Erfindung ist die mindestens eine grenzflächenaktive Substanz ausgewählt aus Emulgatoren, Tensiden, Benetzern, Dispergiermitteln und/oder Mischungen dieser.

Benetzer können beispielsweise sein Lecithin, Terpene, Glycoside, Glycosaminoglycane, Phospholipide.

In Ausführungsformen der Erfindung ist die mindestens eine grenzflächenaktive Substanz ausgewählt aus Sulfonsäurederivaten, Fettsäurederivaten; Ölsäurederivaten, Monoglyceriden, Digylceriden, Triglyceriden, Alkoxylaten, Polyolfefinen, kationischen oder anionischen Salzen, Polyalkoholen, Polyethern, Alkoholen, Carbonsäuren und/oder Mischungen dieser.

In Ausführungsformen der Erfindung beträgt der Massenanteil der mindestens einen grenzflächenaktiven Substanz 0,05 Gew.-% bis 0,1 Gew.-% an der Gesamtmasse der Zusammensetzung.

Die Herstellung einer erfindungsgemäßen Zusammensetzung zur Saatgutbehandlung gegen Vogelfraß erfolgt umfassend die folgenden Schritte:
a) Bereitstellen mindestens eines Pflanzenmaterials und/oder Pflanzenextrakts, enthaltend mindestens einen Bitterstoff und/oder mindestens einen Scharfstoff, wobei ein Pflanzenmaterial und/oder Pflanzenextrakt enthaltend mindestens einen Bitterstoff hergestellt ist aus Pflanzen, ausgewählt aus der Gruppe umfassend *Artemisia* spp., *Rheum* spp., *Gentiana* spp., *Alpinia* spp., *Angelica* spp., *Elettaria spp., Humulus spp., Pimpinella spp. Citrus spp., Centaurium spp., Valeriana* spp., *Commiphora* spp., *Cichorium* spp., *Achillea* spp., *Cinchona* spp., *Quassia* spp. und/oder *Coriandrum* spp.,
   wobei ein Pflanzenmaterial und/oder Pflanzenextrakt enthaltend mindestens einen Scharfstoff hergestellt ist aus Pflanzen, ausgewählt aus der Gruppe umfassend Eutrema spp., Armoracia spp., Aframomum spp., Cinnamomum camphora, Curcuma spp. und/oder Zingiberaceaegewächse und
b) Mischen mit mindestens einer aromatischen Verbindung ausgewählt aus der Gruppe umfassend Anetol, o-Anisaldehyd, Anthranilsäuremethylester, Benzaldehyd, Benzylacetat, Zimtalkohol, Zimtaldehyd, Essigsäurecinnamylester, Hydrozimtaldehyd, Methylphenylacetat, Phenylethanol, wobei die mindestens eine aromatische Verbindung einen Gehalt im Bereich von 0,1 Gew.-% bis 1 Gew.-% bezogen auf das Gesamtgewicht der Zusammensetzung aufweist

Zweckmäßig können die Schritte a und b vertauscht werden oder gleichzeitig erfolgen.

In Ausführungsformen der Erfindung erfolgt zusätzlich ein Schritt
c) Mischen mit mindestens einer organischen oder anorganischen Schwefelverbindung.

Zweckmäßig können die Verfahrensschritte in beliebiger Reihenfolge erfolgen.

In einer Ausführungsform erfolgen die Schritte des Verfahrens dann in der Reihenfolge
- a), b), c); oder
- b), a), c) oder
- a), c), b) oder
- a), b) und c) gleichzeitig.

In Ausführungsformen der Erfindung erfolgt weiterhin die Zugabe eines blauen Farbstoffes.

In einer Ausführungsform erfolgt weiterhin die Zugabe eines grünen oder braunen Farbstoffs.

In Ausführungsformen der Erfindung erfolgt weiterhin die Zugabe mindestens eines Haftmittels bzw. eines Trägerstoffs, eines Düngemittels, eines Entschäumungsmittels, eines Dispergiermittels und/oder eines Puffers.

Ein weiterer Aspekt der Erfindung betrifft die Verwendung der erfindungsgemäßen Zusammensetzung zur Beschichtung von Saatgut, insbesondere als Repellent zur Saatgutbehandlung gegen Vogelfraß.

Die erfindungsgemäße Zusammensetzung eignet sich zur Beschichtung von Samen von Nutz- und Kulturpflanzen. Dabei eignet sich die erfindungsgemäße Zusammensetzung, je nach Feststoffanteil für Filmcoating, Inkrustierung oder Pelletierung.

In Ausführungsformen der Erfindung erfolgt die Beschichtung von Saatgut mittels Filmcoating, Inkrustierung oder Pelletierung.

Geeignete Samenarten für das Filmcoating sind beispielsweise Mais, Getreide, Sonnenblumen, Soja, Kürbis, Paprika, Melone, Bohnen.

Geeignete Samenarten für die Inkrustierung sind beispielsweise Getreide, Rote Beete, Bohnen, Luzerne, Lupine, Tomate, Raps, Petersilie, Möhre.

Geeignete Samenarten für die Pelletierung sind beispielsweise Raps, Rüben, Salate, Petersilie, Kohl, Zwiebel, Lauch, Kräuter, Grassaaten.

In Ausführungsformen der Erfindung erfolgt eine Beschichtung mittels Filmcoating bei einer erfindungsgemäßen Zusammensetzung mit einem Feststoffanteil im Bereich von 1 Gew.-% bis 40 Gew.-% bezogen auf die Gesamtmasse der Zusammensetzung.

In Ausführungsformen der Erfindung erfolgt eine Beschichtung mittels Inkrustierung bei einer erfindungsgemäßen Zusammensetzung mit einem Feststoffanteil im Bereich von 30Gew.-% bis 60 Gew.-% bezogen auf die Gesamtmasse der Zusammensetzung.

In Ausführungsformen der Erfindung erfolgt eine Beschichtung mittels Pelletierung bei einer erfindungsgemäßen Zusammensetzung mit einem Feststoffanteil im Bereich von 50Gew.-% bis 70 Gew.-% bezogen auf die Gesamtmasse der Zusammensetzung.

In Ausführungsformen der Erfindung erfolgt die Applikation der erfindungsgemäßen Zusammensetzung nach einem dem Fachmann bekannten Verfahren.

In Ausführungsformen der Erfindung erfolgt die Herstellung von beschichtetem Saatgut mit den folgenden Schritten:
a) Bereitstellung eines Saatguts,
b) Applizieren der erfindungsgemäßen Zusammensetzung auf dem Saatgut und
c) Trocknung des beschichteten Saatguts.

Zweckmäßig erfolgt bei der Trocknung auch ein Einziehen der erfindungsgemäßen Zusammensetzung in das Saatgut.

In Ausführungsformen der Erfindung erfolgt die Trocknung des Saatguts bei 10 °C bis 45 °C, bevorzugt bei 20 °C bis 40 °C, besonders bevorzugt bei Raumtemperatur.

In Ausführungsformen der Erfindung beträgt die Dauer des Schrittes c) 2 s bis 15 s, bevorzugt 3 s bis 7 s.

In Ausführungsformen der Erfindung erfolgt mindestens eine Wiederholung der Applikation der erfindungsgemäßen Zusammensetzung, wobei Schritt b) und Schritt c) wiederholt werden.

In weiteren Ausführungsformen der Erfindung erfolgt Schritt b) durch die folgenden Teilschritte:
b-1) Applikation der Flüssigkomponente,
b-2) Applikation der Feststoffkomponente,
wobei Schritt b-1) vor Schritt b-2) erfolgt, wobei im Anschluss die beiden Teilschritte im Wechsel beliebig oft wiederholt werden können, bis die gewünschte Beladung des Saatguts erreicht ist.

Unter dem Begriff "Flüssigkomponente" wird eine Mischung aller flüssigen Bestandteile der erfindungsgemäßen Zusammensetzung verstanden, also der Flüssiganteil der erfindungsgemäßen Zusammensetzung, insbesondere beispielsweise Pflanzenextrakte, oder eine wässrige Lösung oder eine Suspension aller Bestandteile. In Ausführungsformen weist die Flüssigkomponente eine Viskosität im Bereich von 1 bis 10⁴ mPa*s auf.

Vorteilhaft bewirkt der Einsatz von grenzflächenaktiven Substanzen in der Flüssigkomponente eine bessere Benetzung und damit Haftung der Flüssigkomponente während des Auftrags auf das Saatgut.

Unter dem Begriff "Feststoffkomponente" wird eine Mischung aller festen Bestandteile der erfindungsgemäßen Zusammensetzung verstanden, insbesondere beispielsweise Pflanzenmaterial oder Trockenextrakt oder Schwefelverbindung.

In weiteren Ausführungsformen der Erfindung enthält die Feststoffkomponente zusätzlich mindestens ein anorganisches, poröses Material, ausgewählt aus Tonmineralien oder Mischungen von Tonmineralien, beispielsweise Bentonite, Kaolinite, Vermiculite, Illite, Montmorillonite, Diabasgesteinsmehl, Quarze, Nesosilikate oder Olivine.

In weiteren Ausführungsformen der Erfindung beträgt der Massenanteil des zusätzlichen, anorganischen, porösen Materials an der Gesamtmasse der Feststoffkomponente 1 bis 20 %, bevorzugt 1 bis 10%.

In Ausführungsformen der Erfindung enthält die Feststoffkomponente zusätzlich Füllstoffe wie Tonmineralien, Fasern, Pflanzenkohle und/oder Calciumcarbonat.

In weiteren Ausführungsformen der Erfindung erfolgt in Schritt b) die Applikation der Flüssigkomponente, gefolgt von den Schritten:
d) Trocknung der Flüssigkomponente,
e) erneutes Aufbringen der Flüssigkomponente auf das Saatgut und
f) Zugabe der Feststoffkomponente bis zur Sättigung.

In weiteren Ausführungsformen der Erfindung werden die Schritte d) und e) 1- bis 5-mal wiederholt. Vorteilhaft kann damit eine große Menge an Flüssigkomponente ins Saatgut einziehen, bevor die Feststoffkomponente ein weiteres Einziehen verhindert.

In weiteren Ausführungsformen der Erfindung erfolgen nach Schritt f) die Schritte:
g) erneutes Aufbringen der Flüssigkomponente und
h) Wiederholung der Schritte f) und g) 1- bis 12-mal.

Vorteilhaft kann durch dieses Vorgehen, kombiniert mit der guten Haftbarkeit einer erfindungsgemäßen Zusammensetzung eine hohe Beladung an erfindungsgemäßer Zusammensetzung auf dem Saatgut erreicht werden.

In weiteren Ausführungsformen der Erfindung werden pro kg Saatgut 1 g bis 100 g, bevorzugt 10 g bis 50 g, insbesondere 10 g bis 20 g erfindungsgemäße Zusammensetzung appliziert.

In weiteren Ausführungsformen der Erfindung erfolgt die Beschichtung mittels Filmcoating. Insbesondere wird dieses Verfahren für Saatgut mit großer Oberfläche angewendet, beispielsweise Mais.

In Ausführungsformen der Erfindung erfolgt das Filmcoating durch die Applikation der erfindungsgemäßen Zusammensetzung in Schritt b) in Form eines "Slurrys" bzw. einer Suspension über eine Dosieranlage zu dem Saatgut und die Beschichtung in einem *Batch coater* oder einer kontinuierlichen Anlage. Die Suspension wird dabei gleichmäßig über Teller (Spin Disc) und Zentrifugalkraft auf dem Saatgut verteilt. Im Falle von Mais als Saatgut dauert die Beschichtung pro 50 000 Korn ca. 14 Sekunden. Optional können im Anschluss an Schritt b) die Schritte d) und e) erfolgen, d. h. die Trocknung der Flüssigkomponente und erneutes Aufbringen der Flüssigkomponente auf das Saatgut. Schließlich erfolgt die Absackung des mit dem Flüssigkeitsfilm überzogenen Saatguts und dessen Trocknung (Schritt c)).

In Ausführungsformen der Erfindung erfolgt die Beschichtung des Saatguts mittels Inkrustierung.

In Ausführungsformen der Erfindung erfolgt die Inkrustierung durch (ggf. mehrfache) Applikation der erfindungsgemäßen Zusammensetzung auf das Saatgut und anschließend Schritt b-2) bzw. f), d. h. die Applikation einer Feststoffkomponente, bevorzugt in Form eines Pulvers. Die Zugabe erfolgt bis zur Sättigung, d. h. bis das Pulver die Flüssigkeit vollständig aufgenommen hat.

In Ausführungsformen der Erfindung erfolgt nach Schritt f) eine erneute Applikation von erfindungsgemäßer Zusammensetzung und wiederum Applikation einer Feststoffkomponente in Form von Pulver.

In Ausführungsformen der Erfindung erfolgen die Schritte a) bis h) je nach Saatgut bis zur Verdopplung des Eigengewichts des Saatguts.

In Ausführungsformen der Erfindung erfolgt die Beschichtung des Saatguts mittels Pelletierung. Dabei erfolgen die Schritte analog zum Inkrustierungsverfahren, jedoch in einer, dem Fachmann für die Pelletierung von Saatgut bekannten Anlage.

Gegenstand der Erfindung ist auch Saatgut, beschichtet mit der erfindungsgemäßen Zusammensetzung und/oder beschichtetes Saatgut, umfassend ein Saatgut und eine Beschichtung, enthaltend eine erfindungsgemäße Zusammensetzung.

Für die Realisierung der Erfindung ist es auch zweckmäßig, die vorbeschriebenen Ausführungsformen und Merkmale der Ansprüche zu kombinieren. Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

### Ausführungsbeispiele

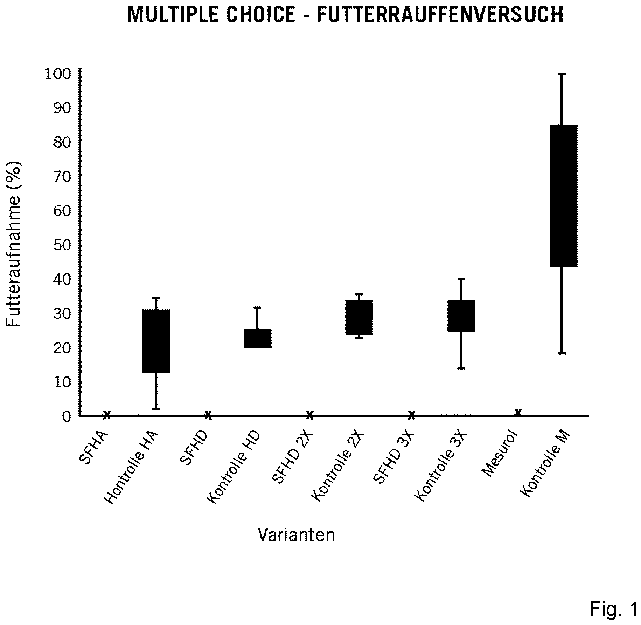

Nachfolgend soll die Erfindung anhand einiger Ausführungsbeispiele eingehender erläutert werden. Die Ausführungsbeispiele sollen dabei die Erfindung beschreiben ohne diese zu beschränken.
Dabei zeigt Fig. 1: Ergebnisse der Futterraufenversuche.
Fig. 2 zeigt die Ergebnisse der Feldversuche zum Vogelfraß von Maissaatgut, beschichtet mit zwei erfindungsgemäßen Zusammensetzung, am ersten Standort nach 25 Tagen.
Fig. 3 zeigt die Ergebnisse der Feldversuche zum Vogelfraß von Maissaatgut, beschichtet mit zwei erfindungsgemäßen Zusammensetzung, am ersten Standort nach 32 Tagen.
Fig. 4 zeigt die Ergebnisse der Feldversuche zum Vogelfraß von Maissaatgut, beschichtet mit zwei erfindungsgemäßen Zusammensetzung, am zweiten Standort nach 17 Tagen.
Fig. 5 zeigt die Ergebnisse der Feldversuche zum Vogelfraß von Maissaatgut, beschichtet mit zwei erfindungsgemäßen Zusammensetzung, am zweiten Standort nach 25 Tagen.
Fig. 6 zeigt einen Vergleichsversuch: Ergebnisse der Feldversuche zum Vogelfraß von Maissaatgut, beschichtet mit zwei erfindungsgemäßen Zusammensetzung im Vergleich zu einer Referenzzusammensetzung ohne mindestens eine aromatische Verbindung als Durchschnittswert von zweiten Standorten zu zwei Zeitpunkten.

Dargestellt in Fig. 1 ist der Anteil an aufgenommenem Futter im Vergleich zur Gesamtfuttermenge in %.
SFHA: Maissaatgut mit einer einfachen Beschichtung nach Ausführungsbeispiel 2
SFHD: Maissaatgut mit einer einfachen Beschichtung nach dem Ausführungsbeispiel 1
SFHD 2X: Maissaatgut mit einer zweifachen Beschichtung nach dem Ausführungsbeispiel 1
SFHD 3X: Maissaatgut mit einer dreifachen Beschichtung nach dem Ausführungsbeispiel 1
Mesurol: Maissaatgut mit einer einfachen Beschichtung an Mesurol.

Die Kontrolle zeigt jeweils die Menge an Futter, die aufgenommen wurde, wenn das Futter keine Beschichtung aufwies, jeweils gemessen an der Gesamtfuttermenge.

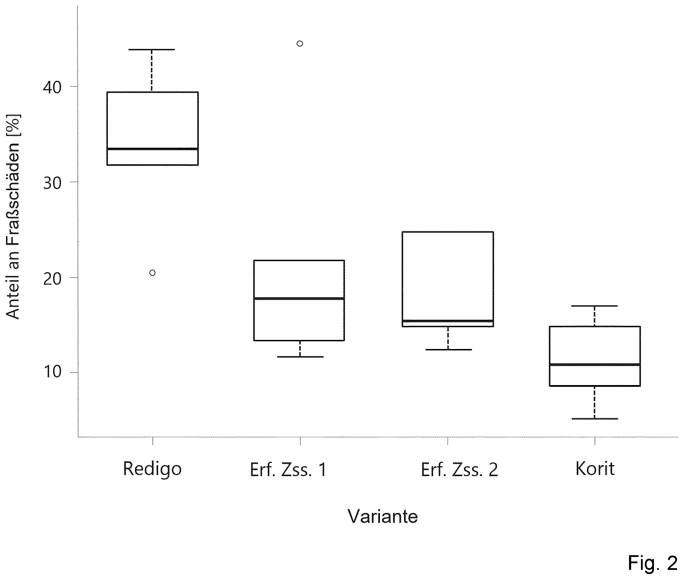

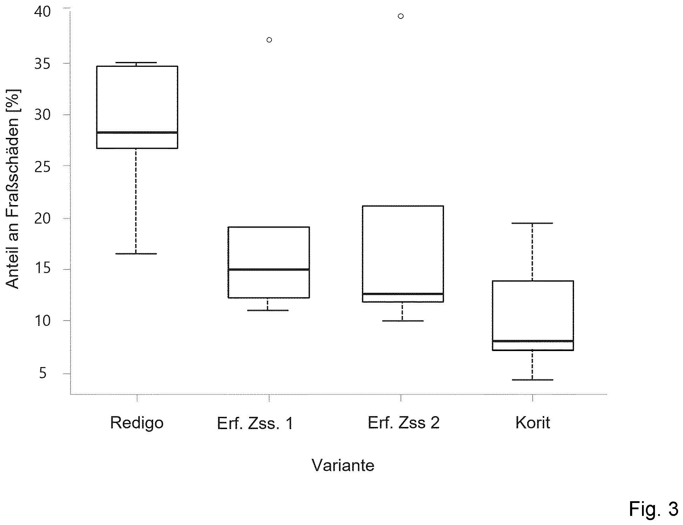

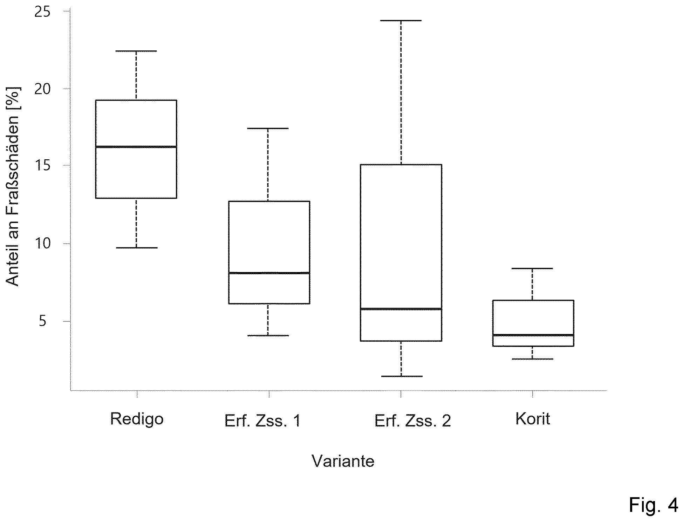

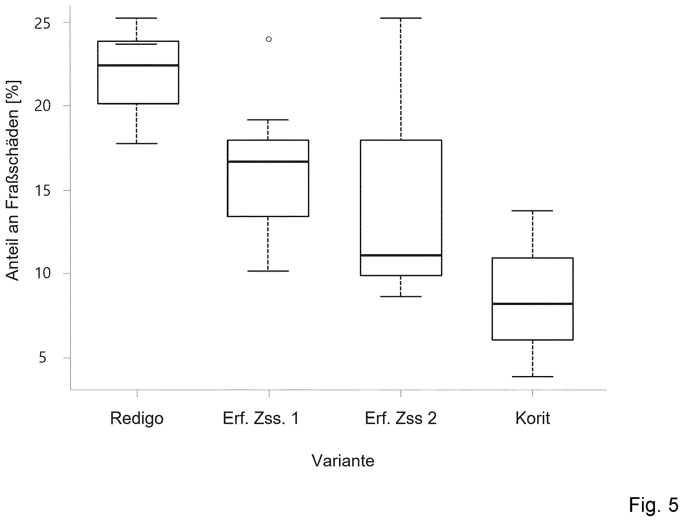

Dargestellt in Fig. 2 bis 5 ist der Anteil an Fraßschäden von Maissaatgut, beschichtet mit vier verschiedenen Zusammensetzungen (Redigo^{®}, zwei erfindungsgemäße Zusammensetzungen (erf. Zss. 1 entspricht der Zusammensetzung nach Ausführungsbeispiel 1 und erf. Zss. 2 entspricht der Zusammensetzung nach Ausführungsbeispiel 5, Korit^{®}), an jeweils zwei Standorten zu zwei verschiedenen Zeitpunkten. An Standort 1 erfolgte eine Bestimmung nach 25 bzw. 32 Tagen und an Standort 2 nach 17 bzw. 25 Tagen. Der Anteil ergibt sich aus dem Verhältnis der Anzahl an Schäden zu der Summe der Anzahl an intakten Pflanzen und Schäden.

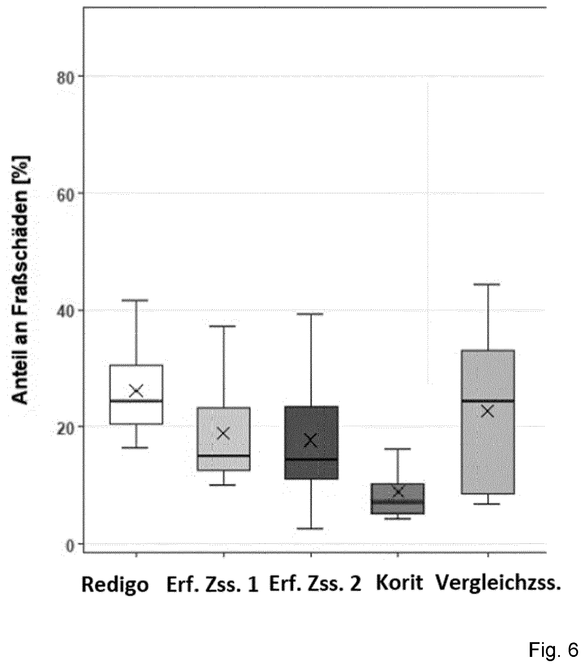

Dargestellt in Fig. 6 ist der Anteil an Fraßschäden von Maissaatgut, beschichtet mit fünf verschiedenen Zusammensetzungen (Redigo^{®}, zwei erfindungsgemäße Zusammensetzungen (erf. Zss. 1 entspricht der Zusammensetzung nach Ausführungsbeispiel 1 und erf. Zss. 2 entspricht der Zusammensetzung nach Ausführungsbeispiel 5), Korit^{®}, einer Vergleichszusammensetzung nach Referenzbeispiel 1 ohne mindestens eine aromatische Verbindung) mit einem Gehalt im Bereich von 0,1 Gew.-% bis 1 Gew.-%, bezogen auf das Gesamtgewicht der Zusammensetzung, als Durchschnitt der zwei Standorte und der zwei verschiedenen Zeitpunkte (nach 25 und 32 Tagen bzw. 17 und 25 Tagen).

Ausführungsbeispiel 1:
Die wässrigen Pflanzenextrakte werden, entsprechend ihrer prozentualen Anteile, eingewogen oder volumetrisch gemessen und in ein geeignetes Mischgefäß abgefüllt. Die weiteren Bestandteile werden ebenso entsprechend ihrer prozentualen Anteile eingewogen. Im nächsten Schritt wird ein geeignetes Dispersionsmittel mit einem Dissolver oder einem anderen dafür geeigneten Mischwerkzeug (< 1500 rpm) dispergiert. Danach wird ein Emulgator zugegeben, um Methylanthranilat und Benzaldehyd zu emulgieren. In den weiteren Schritten werden Huminsäuren, Düngemittel und die pulverisierten Pflanzenmaterialien in die Lösung dispergiert. Im letzten Schritt wird das Polyvinylacetat schonend in die Suspension eingerührt (> 300 rpm).

In einer Ausführung kann sich die Suspension aus folgenden Bestandteilen zusammensetzen:
- 15 % (w/w) Artemisia spp. getrocknetes, pulverisiertes Pflanzenmaterial,
- 15 % (w/w) Rheum spp. getrocknetes, pulverisiertes Pflanzenmaterial,
- 2 % (w/w) Gentiana-Extrakt (wässrig),
- 3 % (w/w) Cinchona spp.-Extrakt (wässrig),
- 0,8 % (w/w) Methylanthranilat,
- 0,7 % (w/w) Benzaldehyd und
- 1,6 % (w/w) Zinksulfat,
- 30 % (w/w) weitere wässrige Pflanzenextrakte (enthalten Biostimulanzien),
- 9 % (w/w) Huminsäuren,
- 15 % (w/w) Düngemittel,
- 0,2 % Emulgator,
- 0,8 % Dispersionsmittel,
- 9,5 % (w/w) Polyvinylacetat als Haftmittel.

Ausführungsbeispiel 2:
Die Reihenfolge und Vorgehensweise hinsichtlich des Mischvorgangs entsprechen dem Ausführungsbeispiel 1. In diesem Ausführungsbeispiel werden folgende Substanzen verwendet:
15 % (w/w) *Elettaria spp.* getrocknetes, pulverisiertes Pflanzenmaterial,
15 % (w/w) *Humulus spp.* getrocknetes, pulverisiertes Pflanzenmaterial,
2 % (w/w) *Commiphora* spp. (wässrig),
3 % (w/w) Armoracia spp.-Extrakt (wässrig),
0,8 % (w/w) Methylbenzoat,
0,7 % (w/w) Benzoesäure,
1,6 % (w/w) Magnesiumsulfat,
30 % (w/w) weitere wässrige Pflanzenextrakte (enthalten Biostimulanzien),
9 % (w/w) Huminsäuren,
15 % (w/w) Düngemittel,
0,2 % Emulgator,
0,8 % Dispersionsmittel,
9,5 % (w/w) Polyvinylacetat als Haftmittel.

Ausführungsbeispiel 3:
Die Reihenfolge und Vorgehensweise hinsichtlich des Mischvorgangs entsprechen dem Ausführungsbeispiel 1 und 2. In diesem Ausführungsbeispiel werden folgende Substanzen verwendet:
15 % (w/w) *Angelica* spp. getrocknetes, pulverisiertes Pflanzenmaterial,
15 % (w/w) *Citrus spp.* getrocknetes, pulverisiertes Pflanzenmaterial,
2 % (w/w) *Coriandrum* spp. (wässrig),
3 % (w/w) *Cichorium* spp.-Extrakt (wässrig),
0,8 % (w/w) Methylbenzoat,
0,7 % (w/w) Benzoesäure,
1,6 % (w/w) Calciumsulfat,
30 % (w/w) weitere wässrige Pflanzenextrakte (enthalten Biostimulanzien),
9 % (w/w) Huminsäuren,
15 % (w/w) Düngemittel,
0,2 % Emulgator,
0,8 % Dispersionsmittel,
9,5 % (w/w) Polyvinylacetat als Haftmittel.

Ausführungsbeispiel 4:
Zur Ermittlung der Wirksamkeit wurden Futterraufenversuche durchgeführt.
Maissaatgut wurde mit einer Beschichtung nach Ausführungsbeispiel 2 (SFHA) und nach dem Ausführungsbeispiel 1 (SFHD), sowie wiederholt nach dem Ausführungsbeispiel 1 (SFHD 2X, SFHD 3X) beschichtet.
Zum Vergleich wurde den Fasanen unbeschichtetes Futter angeboten Es wurde anschließend bestimmt, wie hoch der Anteil an durch die Vögel gefressenem Futter an der Gesamtfuttermenge ist.
Die Ergebnisse sind in Fig. 1 dargestellt.

Erkennbar ist, dass Saatgut, welches mit der erfindungsgemäßen Beschichtung versehen ist, von den Vögeln nicht aufgenommen wurde.

Vom unbeschichteten Futter (Kontrolle) wurde jeweils ein bestimmter Anteil in % an der Gesamtmenge an Futter durch die Vögel gefressen.

Als Referenz wurden Daten von vorhergegangenen Versuchen mit Mesurol mit einbezogen. Mesurol ist ein hochwirksamer Repellent, enthaltend 3,5-Dimethyl-4-(methylsulfanyl)phenyl-*N-*methylcarbamat, welcher aufgrund seiner hohen Toxizität nur noch unter strengen Auflagen verwendet werden darf.

Die repellente Wirkung der erfindungsgemäßen Beschichtung ist vergleichbar gut.

Ausführungsbeispiel 5:
Die Reihenfolge und Vorgehensweise hinsichtlich des Mischvorgangs entsprechen dem Ausführungsbeispiel 1. In diesem Ausführungsbeispiel werden folgende Substanzen verwendet:
15 % (w/w) *Elettaria spp.* getrocknetes, pulverisiertes Pflanzenmaterial,
13 % (w/w) *Humulus spp.* getrocknetes, pulverisiertes Pflanzenmaterial,
2 % (w/w) *Commiphora* spp. (wässrig),
2 % (w/w) Armoracia spp.-Extrakt (wässrig),
1,1 % (w/w) Methylanthranilat,
1,1 % (w/w) Benzaldehyd,
1,3 % (w/w) Magnesiumsulfat.
30 % (w/w) weitere wässrige Pflanzenextrakte (enthalten Biostimulanzien),
9 % (w/w) Huminsäuren,
15 % (w/w) Düngemittel,
0,2 % Emulgator,
0,8 % Dispersionsmittel,
9,5 % (w/w) Polyvinylacetat als Haftmittel.

Ausführungsbeispiel 6:
Die Reihenfolge und Vorgehensweise hinsichtlich des Mischvorgangs entsprechen dem Ausführungsbeispiel 1 und 2. In diesem Ausführungsbeispiel werden folgende Substanzen verwendet:
15 % (w/w) *Angelica* spp. getrocknetes, pulverisiertes Pflanzenmaterial,
15 % (w/w) *Citrus spp.* getrocknetes, pulverisiertes Pflanzenmaterial,
2 % (w/w) *Coriandrum* spp. (wässrig),
3 % (w/w) *Cichorium* spp.-Extrakt (wässrig),
0,8 % (w/w) Methylanthranilat,
0,7 % (w/w) Benzaldehyd
1,6 % (w/w) Calciumsulfat
30 % (w/w) weitere wässrige Pflanzenextrakte (enthalten Biostimulanzien)
9 % (w/w) Huminsäuren
15 % (w/w) Düngemittel
0,2 % Emulgator
0,8 % Dispersionsmittel
9,5 % (w/w) Polyvinylacetat als Haftmittel

Referenzbeispiel 1:
Die Reihenfolge und Vorgehensweise hinsichtlich des Mischvorgangs entsprechen dem Ausführungsbeispiel 1. In diesem Ausführungsbeispiel werden folgende Substanzen verwendet:
15,34 % (w/w) *Elettaria spp.* getrocknetes, pulverisiertes Pflanzenmaterial,
13,29 % (w/w) *Humulus spp.* getrocknetes, pulverisiertes Pflanzenmaterial,
2,04 % (w/w) *Commiphora* spp. (wässrig),
2,04 % (w/w) Armoracia spp.-Extrakt (wässrig),
1,33 % (w/w) Magnesiumsulfat.
30,67 % (w/w) weitere wässrige Pflanzenextrakte (enthalten Biostimulanzien),
9,20 % (w/w) Huminsäuren,
15,34 % (w/w) Düngemittel,
0,2 % Emulgator,
0,82 % Dispersionsmittel,
9,71 % (w/w) Polyvinylacetat als Haftmittel.

Ausführungsbeispiel 7:
Zur Ermittlung der Wirksamkeit wurden weiterhin Feldversuche durchgeführt. Dazu wurden verschiedene erfindungsgemäße Zusammensetzungen (erf. Zss. 1 entspricht der Zusammensetzung nach Ausführungsbeispiel 1 und erf. Zss. 2 entspricht der Zusammensetzung nach Ausführungsbeispiel 5), sowie als Positivkontrolle Korit^{®}, ein zugelassenes Vogelrepellent, und als Negativkontrolle Redigo^{®}, ein fungizides Saatgutbeschichtungsmittel, auf Maissaatgut getestet.

In einem weiteren Versuch wurde zusätzliche eine Vergleichszusammensetzung nach Referenzbeispiel 1 getestet, welche der erfindungsgemäßen Zusammensetzung ohne mindestens eine aromatische Verbindung entspricht.

Für den Versuch wurden 20 Standorte bzw. landwirtschaftliche Betriebe ausgewählt, die in den vergangenen Jahren durch Vogelfraß im auflaufenden Mais geschädigt wurden. Die Standorte sind weiträumig über Nordrhein-Westfahlen, Niedersachen, Schleswig-Holstein, Mecklenburg-Vorpommern, Sachsen-Anhalt, und Brandenburg verteilt.

Von den 17 Betrieben haben zwölf Betriebe einen Versuch mit vier Varianten angelegt. Fünf Betriebe setzen einen größeren Versuchsaufbau mit zehn unterschiedlichen Varianten um.

Zur Aussaat werden die Varianten achtreihig auf circa 100 m Länge gelegt und dreifach wiederholt. Die Aussaatstärke, der Aussaattermin und Ablagetiefe ist betriebsüblich.

Die Bonitur findet an drei Terminen, mit je einer Woche Abstand, zwischen dem Spitzen der Maispflanzen und dem drei bis vier Blatt Stadium statt. Zur Bonitur werden pro Variante sechs Auszählstellen (6 Reihen x 10 m) eingemessen und markiert. In diesen Auszählstellen werden an den drei Terminen sowohl die Anzahl der intakten Pflanzen sowie die eindeutig zu identifizierbaren Schäden aufgenommen. Als Schäden sind Bodenlöcher sowie gravierende Fraßschäden an der Pflanze zu identifizieren.

Nach intensiver Prüfung der Ergebnisse aller Standorte, zeigte sich das lediglich zwei Standorte mit einem moderatem Vogeldruck für die Auswertung geeignetwaren. In Fig. 2 bis 4 ist der Anteil an Fraßschäden aus zwei Standorten zu sehen. Der Anteil ergibt sich aus dem Verhältnis der Anzahl an Schäden zu der Summe der Anzahl an intakten Pflanzen und Schäden.

Die geringsten Schäden zeigen die noch zugelassene repellente Maisbeize Korit^{®} (durchschnittlich 8,87 %) sowie die erfindungsgemäßen Zusammensetzungen (18,92 % und 17,75 %). Der größte Schaden wurde bei Redigo^{®} mit 26,2 %. beobachtet.

Im Vergleich zu der fungiziden Grundbeize (Redigo) hat die repellente Saatgutbeize Korit eine Schadreduktion von circa 26 auf 9 %. Die biobasierten erfindungsgemäßen Zusammensetzungen erzielten eine deutliche Schadreduktion des Vogelfraßes von circa 26 auf 18 %. Die Produkte, die entwickelt wurden, um eine bessere Pflanzenentwicklung zu gewährleisten und somit resilientere Pflanzen wachsen zu lassen, schaffen durch ihre besonders angepasste Formulierung zusätzlich eine Fraßreduktion ohne auf synthetische Substanzen zurückzugreifen.

Der Vergleich mit der Referenzzusammensetzung, welche keine aromatische Verbindung aufweist, zeigt eine verringerte repellente Wirkung, welche der Negativkontrolle in Form der fungiziden Grundbeize (Redigo) entspricht, wobei allerdings eine wesentlich größere Standardabweichung aufgetreten ist

### Zitierte Nichtpatentliteratur

Askham LR (1992) Efficacy of methyl anthranilate as a bird repellent on cherries, blueberries and grapes. Proceedings of the Fifteenth Vertebrate Pest Conference. Paper 3. 137-141.

Clark L (1997) A Review of the Bird Repellent Effects of 117 Carbocyclic Compounds Birds, Chapter 29, 343-352 In: Mason JR. Repellents in Wildlife Management (1995) USDA, National Wildlife Research Center.

De Almeida A, Zarate do Couto HT, de Almeida AF (2010) Are camouflaged seeds less attacked by wild birds? Scientia Agricola 67(2), 170-175, XPO55849300, DOI: 10.1590/80103-90162010000200007.

Kniestedt C, Fleischhauer J, Stürmer J, Thiel MA (2005) Pfeffersprayverletzungen des vorderen Augensegmentes. Klinische Monatsblätter fürAugenheilkunde 222 (3), 267-270, DOI: 10.1055/s-2005-857978.

Schneider D, Schaller L, Seuß-Baum I, Schlich E (2012) Vergleich des Schärfeprofils verschiedener Schärfe auslösender Substanzen mit Hilfe der Profilprüfung (nach DIN 10967-1). Conference Paper, 1-2, XP055849415, URL: https://www.researchgate.net/publication/ 280877058_Vergleich_des_Scharfeprofils_verschiedener_Scharfe_auslosender_Substanzen_ mit_Hilfe_der_Profilprufung_nach_DIN_1 0967-1/link/55c9be9808aeb9756747a04b/download. Valente I, Moreira MM, Neves P, da Fe T, Goncalves LM, Almeida PJ, Rodrigues JA (2017) An insight on Salting-out Assisted Liquid-Liquid Extraction for Phytoanalysis : Salting-out assisted liquid-liquid extraction in plant analysis. Phytochemical Analysis 28 (4), 297-304, DOI: 10.1002/pca.2676.

Li S, et al. (2011) Chemical composition and product quality control of turmeric (Curcuma longa L.). Pharmaceutical Crops, 28-54, XP055849011, URL: https://core.ac.uk/download/pdf/72733173.pdf

## Patentansprüche

1. Zusammensetzung zur Saatgutbehandlung gegen Vogelfraß umfassend
i. mindestens ein Pflanzenmaterial und/oder Pflanzenextrakt, enthaltend mindestens einen Bitterstoff und/oder Scharfstoff,
wobei ein Pflanzenmaterial und/oder Pflanzenextrakt, enthaltend mindestens einen Bitterstoff ausgewählt ist aus Artemisia spp., Rheum spp., Gentiana spp., Alpinia spp., Angelica spp., Elettaria spp., Humulus spp., Pimpinella spp., Citrus spp., Centaurium spp., Valeriana spp., Commiphora spp., Cichorium spp., Achillea spp., Cinchona spp., Quassia spp. und/oder Coriandrum spp.,
wobei ein Pflanzenmaterial und/oder Pflanzenextrakt, enthaltend mindestens einen Scharfstoff ausgewählt ist aus *Eutrema spp., Armoracia spp., Aframomum spp., Cinnamomum camphora, Curcuma* spp., und/oder *Zingiberaceae*gewächse*,* und
ii. mindestens eine aromatische Verbindung, ausgewählt aus der Gruppe umfassend Anetol, o-Anisaldehyd, Anthranilsäuremethylester, Benzaldehyd, Benzylacetat, Zimtalkohol, Zimtaldehyd, Essigsäurecinnamylester, Hydrozimtaldehyd, Methylphenylacetat, Phenylethanol, ,
wobei die mindestens eine aromatische Verbindung einen Gehalt im Bereich von 0,1 Gew.-% bis 2 Gew.-% bezogen auf das Gesamtgewicht der Zusammensetzung aufweist.

2. Zusammensetzung nach Anspruch 1, **dadurch gekennzeichnet, dass** die Zusammensetzung zusätzlich eine organische oder anorganische Schwefelverbindung enthält.

3. Zusammensetzung nach Anspruch 1 oder 2, **dadurch gekennzeichnet, dass** das mindestens eine Pflanzenmaterial ausgewählt ist aus frischem Pflanzenmaterial, kompostiertem Pflanzenmaterial oder getrocknetem Pflanzenmaterial mit oder ohne Restfeuchte.

4. Zusammensetzung nach Anspruch 1 oder 2, **dadurch gekennzeichnet, dass** der mindestens eine Pflanzenextrakt ausgewählt ist aus einem Fluidextrakt, einem Trockenextrakt, einem Dickextrakt.

5. Zusammensetzung nach einem der Ansprüche 1 bis 4, **dadurch gekennzeichnet, dass** das mindestens eine Pflanzenmaterial einen Gehalt im Bereich von 10 Gew.-% bis 60 Gew.-% bezogen auf das Gesamtgewicht der Zusammensetzung aufweist.

6. Zusammensetzung nach einem der Ansprüche 1 bis 4, **dadurch gekennzeichnet, dass** der mindestens eine Pflanzenextrakt einen Gehalt im Bereich von 1 Gew.-% bis 10 Gew.-% bezogen auf das Gesamtgewicht der Zusammensetzung aufweist.

7. Zusammensetzung nach einem der Ansprüche 1 bis 6, **dadurch gekennzeichnet, dass** die mindestens eine aromatische Verbindung Anthranilsäuremethylester oder Benzaldehyd ist.

8. Zusammensetzung nach einem der Ansprüche 2 bis 7, **dadurch gekennzeichnet, dass** die mindestens eine Schwefelverbindung ein Metall-, Alkalimetall- und/oder Erdalkalimetallsulfatsalz ist.

9. Zusammensetzung nach einem der Ansprüche 2 bis 8, **dadurch gekennzeichnet, dass** die mindestens eine Schwefelverbindung einen Gehalt im Bereich von 0,5 Gew.-% bis 2 Gew.-% bezogen auf das Gesamtgewicht der Zusammensetzung aufweist.

10. Zusammensetzung nach einem der Ansprüche 1 bis 9 umfassend weiterhin einen blauen Farbstoff.

11. Zusammensetzung nach einem der Ansprüche 1 bis 10 umfassend weiterhin mindestens ein Haftmittel, ein Düngemittel, ein Entschäumungsmittel, ein Dispergiermittel und/oder ein Puffer.

12. Verwendung der Zusammensetzung nach einem der Ansprüche 1 bis 11 als Repellent zur Saatgutbehandlung gegen Vogelfraß.

13. Saatgut beschichtet mit einer Zusammensetzung nach einem der Ansprüche 1 bis 11 und/oder umfassend eine Beschichtung enthaltend eine Zusammensetzung nach einem der Ansprüche 1 bis 11.
